# EUROPÄISCHE PATENTANMELDUNG

(11) **EP 2 741 016 A1**
(43) Veröffentlichungstag der Anmeldung: **11.06.2014**
(21) Anmeldenummer: 13005063.6
(22) Anmeldetag: 23.10.2013
(51) Int. Cl.: F24D 3/14, E04B 9/00, F21V 33/00

(54) **Flächenheizsystem**

(30) Priorität: 05.12.2012 DE 102012023694
(71) Anmelder: Müller, Ralph, 91567 Herrieden (DE)
(72) Erfinder: Müller, Ralph, 91567 Herrieden (DE)
(74) Vertreter: FDST Patentanwälte

(57) **Zusammenfassung**

Die Erfindung betrifft ein Flächenheizsystem für ein Gebäude, mit mindestens einer Deckenstrahlplatte (1) und mit mindestens einem Leuchtmittel (8, 13), das plattenlängsseitig an der Deckenstrahlplatte (1) gehalten ist.

## Beschreibung

Die Erfindung betrifft ein Flächenheizsystem für ein Gebäude, mit mindestens einer Deckenstrahlplatte.

Derartige Deckenstrahlplatten werden üblicherweise zur Temperierung und insbesondere zur Beheizung von Großräumen, wie beispielsweise Fertigungsbetrieben, Lagerhallen, Werkstätten, Sportstätten oder dergleichen eingesetzt. Die Deckenstrahlplatten sind häufig aus einer im Querschnitt U-förmigen Blechkonstruktion (Blech- oder Lamellenkorpus) mit darin eingelegten und in Plattenlängsrichtung zueinander beabstandet parallel verlaufenden, üblicherweise kreisförmigen Rohren und einer Wärmeisolierung aufgebaut. Die Rohre werden von einem üblicherweise flüssigen Heizmedium durchströmt, das in einem stirnseitig der Rohre angeordneten, sogenannten Register gesammelt bzw. über dieses auf die Rohre verteilt wird.

Die Deckenstrahlplatten werden häufig in unterschiedlichen Plattenbreiten und Plattenlängen bereitgestellt und können vor Ort zu einem praktisch beliebig umfangreichen Flächenheizsystem für ein Gebäude, insbesondere für einen Großraum, montiert werden. Die Montage erfolgt an der Gebäudedecke mittels geeigneter Hängekonstruktionen, wie beispielsweise Drahtseilen oder Ketten (Seil-, Drahtseil- oder Kettenabhängung).

Die Montage der Deckenplatten erfolgt dabei derart, dass deren offene Seite der Gebäudedecke zugewandt ist, während die Außenseite des Blechbodens der U-förmigen Blechkonstruktion dem Rauminneren oder Raumboden zugewandt ist. Die Seitenwände der Blechkonstruktion weisen somit zur Gebäudedecke, während die vom Heizmedium durchströmten Rohre aus Sicht einer im zu beheizenden Raum befindlichen Person vom Blechboden der Blechkonstruktion unsichtbar verdeckt sind. Die Rohre können im Bereich des Blechbodens der Deckenstrahlplatte in Mulden, Vertiefungen oder Sicken einliegen und zusätzlich befestigt sein.

Ein derartiges Flächenheizsystem mit Deckenstrahlplatten arbeitet vorrangig mittels Strahlungswärme und einem nur sehr geringen Anteil an Konvektionswärme. Daher wird mittels derartiger Deckenstrahlplatten in vergleichsweiser kurzer Zeit eine als angenehm empfundene Beheizung auch eines Großraums und damit dessen komfortable Klimatisierung erreicht.

Der Erfindung liegt die Aufgabe zugrunde, ein Flächenheizsystem anzugeben, deren Deckenstrahlplatten hinsichtlich zumindest einer Zusatzfunktion geeignet genutzt sind.

Diese Aufgabe wird erfindungsgemäß gelöst durch die Merkmale des Anspruchs 1. Vorteilhafte Ausgestaltungen, Varianten und Weiterbildungen sind Gegenstand der Unteransprüche.

Erfindungsgemäß ist vorgesehen, derartige Deckenstrahlplatten mit einer Beleuchtung zu kombinieren. Hierzu vorgesehene Leuchtmittel sind vorzugsweise dazu eingerichtet, seitlich an einer Deckenstrahlplatte montiert zu werden. Besonders geeignet ist hierbei eine LED-Beleuchtung.

Gemäß einer ersten Variante sind vorzugsweise röhrenförmige Leuchtmittel vorgesehen, die an einer Seitenwand oder an beiden Seitenwänden der Deckenstrahlplatte, besonders bevorzugt nach Art einer Einhängetechnik, montiert, befestigt oder gehalten werden. Zweckmäßigerweise werden hierzu die U-förmig aufragenden Seitenbleche (Seitenwände) der Deckenstrahlplatte genutzt, indem deren im Montagezustand zur Raum- oder Gebäudedecke weisenden Wandfreienden einen Hintergriff für hakenförmige Einhängeelemente bereitstellen. Dies ermöglicht eine besonders einfache, sichere und zeitsparende sowie insbesondere auch nachträgliche Montage der Leuchtmittel an der jeweiligen Deckenstrahlplatte. Grundsätzlich ist jedoch auch eine andere Befestigungsart, beispielsweise eine Schraub-, Klemm-, Clip- oder Rastbefestigung, der Leuchtmittel an der Deckenstrahlplatte denkbar.

Gemäß einer zweiten Variante ist das oder ein geeignetes Leuchtmittel zwischen zwei Deckenstrahlplatten angeordnet und an diesen mit geeigneten Mitteln gehalten. Die Anordnung des Leuchtmittels ist dann wiederum bezogen auf eine einzelne Deckenstrahlplatte seitlich an dieser.

Bei dieser zweiten Variante ist das Leuchtmittel vorzugsweise plattenförmig nach Art eines Leuchten-Arrays ausgebildet. Bevorzugt ist auch bei dieser zweiten Variante eine LED-Beleuchtung vorgesehen. Diese LED-Beleuchtung wird geeigneterweise mittels Streben, Schienen oder dergleichen an den benachbarten Deckenstrahlplatten befestigt. Auch bei dieser Variante ist eine nachträgliche Montage der Beleuchtung vorteilhaft möglich.

Nachfolgend werden Ausführungsbeispiele der Erfindung anhand einer Zeichnung näher erläutert. Darin zeigen:
- Fig. 1: schematisch in einer Draufsicht eine Deckenstrahlplatte mit seitlich angebrachten Leuchtmitteln,
- Fig. 2: eine Deckenstrahlplatte im Querschnitt mit seitlich eingehängten Leuchtmitteln, und
- Fig. 3: die Anordnung einer Beleuchtung zwischen zwei Deckenstrahlplatten.

Einander entsprechende Teile sind in allen Figuren mit den gleichen Bezugszeichen versehen.

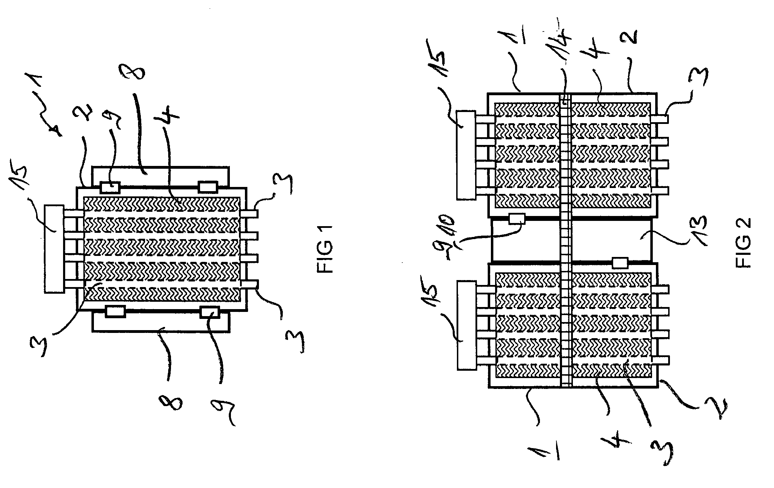

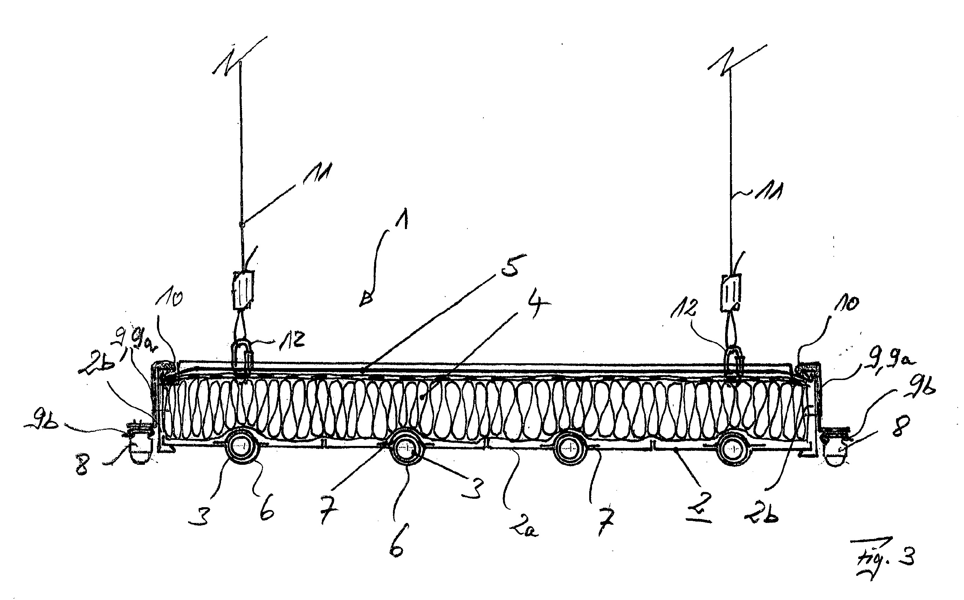

Die in den Figuren 1 und 3 gezeigte Deckenstrahlplatte 1 umfasst einen im Querschnitt U-förmigen Blech- oder Lamellenkorpus 2 mit einer Grundplatte (Blechoder Lamellenboden) 2a und zwei Seitenwänden (Seitenblechen oder -lamellen) 2b. Der Blechkorpus 2 kann als Stanz-Biegeteil ausgeführt oder aus mehreren U-förmigen Stanz-Biegeteilen zusammengesetzt sein, die in Plattenlängsrichtung hintereinander angeordnet und miteinander verbunden, beispielsweise vernietet sind. Die Seitenwände 2b und die Grundplatte 2a können jedoch auch als separate Blechteile hergestellt und anschließend miteinander verbunden, beispielsweise verschweißt oder vernietet sein.

Im Inneren des Blechkorpus 2 der Deckenstrahlplatte 1 sind in Plattenlängsrichtung nebeneinander und zueinander beabstandet sowie zueinander vorzugsweise parallel verlaufend eine Anzahl von Rohren 3 angeordnet. Diese werden im Betrieb der Deckenstrahlplatte 1 von einem Medium, insbesondere einem Heizmedium, beispielsweise Wasser durchströmt.

Die Deckenstrahlplatte 1 weist zudem eine Wärmeisolierung 4 in Form vorzugsweise mittels Aluminium kaschierter oder belegter Mineralwolle auf. Die Isolierung 4 ist vorzugsweise innerhalb des Blechkorpus 2 vollflächig verlegt und deckt insbesondere die Rohre 3 ab. Die Isolierung 4 kann dabei durch zusätzliche Spannstreifen 5 gehalten sein, die vorzugsweise umgebördelte oder umgebogene Blechfreienden der Seitenwände 2b hintergreifen und somit zuverlässig fixiert sind.

Die beispielsweise als Stahlrohre ausgeführten Rohre 3 liegen geeigneterweise in Mulden oder Sicken 6 ein, die in den Blechboden 2a des Blechkorpus 2 eingebracht sind. Zusätzliche Laschen 7 in Form von Blechstreifen oder dergleichen dienen zu einer verbesserten Wärmeleitung und können zusätzlich zur Halterung der Rohre 3 im Blechkorpus 2 beitragen. Der Blechkorpus 2 besteht beispielsweise aus einem Aluminium-Stahlblech.

Seitlich an der Deckenstrahlplatte 1 sind Leuchtmittel 8 in Form von LED-Leuchten (beispielsweise T5-Röhren) angeordnet. Diese erstrecken sich entlang der Seitenwände 2b der Deckenstrahlplatte 1 und sind an den Seitenwänden 2b befestigt. Die Befestigung ist vorzugsweise durch Einhängetechnik realisiert. Hierzu dienen Befestigungswinkel 9 mit hakenförmig ausgebildeten Winkelenden 10, die die jeweilige Seitenwand 2b und dabei insbesondere auch die Umbördelung übergreifen und diese hintergreifen. Hierdurch ist eine zuverlässige und einfach montierbare sowie lösbare Befestigung des oder jedes Leuchtmittels 8 an der Deckenstrahlplatte 1 erreicht.

Die Befestigungsmittel können einteilig oder zweiteilig ausgebildet sein. Bevorzugt weisen die Befestigungsmittel ein mit dem Leuchtmittel 8 zusammenwirkendes Klemmelement 9a sowie ein mit diesem befestigtes Hakenelement 9b in Form beispielsweise des Befestigungswinkels mit freiendseitigem Einhägehaken als Winkelenden 10 auf.

Die Befestigung der Deckenstrahlplatte 1 mit integrierter Beleuchtung an einer Gebäude- oder Raumdecke erfolgt geeigneterweise mittels Drahtseilhängung mit Monoblock-Expresshalter. Entsprechend ausgebildete Schlaufen der Drahtseile 11 werden geeigneterweise in Karabinerhaken 12 eingelegt, die ihrerseits in entsprechende Ösen, Löcher oder Öffnungen eingeklinkt sind. Die Öffnungen können beispielsweise an den Spannstreifen oder an vorhandenen Wänden oder Konstruktionsteilen der Deckenstrahlplatte 1 vorgesehen sein.

Bei der Ausführungsform nach Fig. 2 ist eine geeigneterweise platten- oder rechteckförmige Beleuchtung 13, vorzugsweise wiederum eine LED-Beleuchtung, zwischen zwei zueinander beabstandeten Deckenstrahlplatten 1 angeordnet. Die Halterung der Beleuchtung erfolgt wiederum an der oder jeder Deckenstrahlplatte 1. Hierzu können zusätzliche Trag- und/oder Halteelemente 14 in Form von Schienen, Stangen, Laschen oder Winkeln vorgesehen sein. Auch kann bei dieser Ausführungsform die Halterung der Beleuchtung wiederum als Einhängetechnik 9, 10 an den Seitenwänden 2b der Deckenstrahlplatten 1 ausgeführt sein.

Die Deckenstrahlplatten 1 können unterschiedliche Plattenbreiten von beispielsweise 300mm bis 1.200mm aufweisen. Die zur Förderung des Heizmediums dienenden Stahlrohre sind geeigneterweise im Boden 2a des Blechkorpus' 2 versenkt. Die Plattenlänge der Deckenstrahlplatten 1 kann zwischen beispielsweise 2m und 6m betragen. Um die Gesamtlänge zu erhöhen, können die Deckenstrahlplatten 1 untereinander verbunden werden. Die Anschlussverrohrung der Deckenstrahlplatten 1 kann seriell oder parallel, insbesondere vermittels sogenannter Register 15 an den Rohrenden der Rohre 3 ausgeführt sein.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Deckstrahlplatte
- 2: Blech-/Lamellenkorpus
- 2a: Grundplatte
- 2b: Seitenwand
- 3: Rohr
- 4: Isolierung
- 5: Spannstreifen
- 6: Mulde/Sicke
- 7: Lasche
- 8: Leuchtmittel
- 9: Befestigungswinkel
- 9a: Klemmelement
- 9b: Hakenelement
- 10: Winkelende
- 11: Drahtseil
- 12: Karabinerhaken
- 13: Beleuchtung
- 14: Trag-/Halteelement
- 15: Register

## Patentansprüche

1. Flächenheizsystem für ein Gebäude, mit mindestens einer Deckenstrahlplatte (1) und mit mindestens einem Leuchtmittel (8, 13), das plattenlängsseitig an der Deckenstrahlplatte (1) gehalten ist.

2. Flächenheizsystem nach Anspruch 1,
**dadurch gekennzeichnet,**
**dass** die Deckenstrahlplatte (1) einen Blech- oder Lamellengrundkörper (2) mit in Plattenlängsrichtung verlaufenden Seitenwänden (2b) aufweist, wobei das Leuchtmittel (8, 13) außenseitig an einer der Seitenwände (2b) gehalten ist.

3. Flächenheizsystem nach Anspruch 1 oder 2,
**gekennzeichnet durch**
Befestigungsmittel (9, 10) zur Halterung des Leuchtmittels (8, 13) an einer Seitenwand (2b) der Deckenstrahlplatte (1).

4. Flächenheizsystem nach einem der Ansprüche 1 bis 3,
**dadurch gekennzeichnet,**
**dass** die Halterung des Leuchtmittels (8, 13) an der Deckenstrahlplatte (1) als Einhängevorrichtung (9, 10) ausgebildet ist.

5. Flächenheizsystem nach einem der Ansprüche 1 bis 4,
**dadurch gekennzeichnet,**
**dass** die Halterung des Leuchtmittels (8, 13) an der Deckenstrahlplatte (1) mittels eines hakenartigen Befestigungselementes (10) erfolgt, das die dem Leuchtmittel (8, 13) zugewandte Seitenwand (2b) der Deckenstrahlplatte (1) von der Außenseite her zur Innenseite hin über- und/oder hintergreift.

6. Flächenheizsystem nach einem der Ansprüche 1 bis 5,
**gekennzeichnet durch**
ein Befestigungselement (9, 10) mit einer mit dem Leuchtmittel (8) verbindbaren ersten Halteteil (9a), insbesondere einer Halteklammer, und mit einem mit diesem verbindbaren, insbesondere verschraubbaren, Hakenteil (9b) zur Ausbildung einer Einhängevorrichtung für das Leuchtmittel (8) an der Deckenstrahlplatte (1).

7. Flächenheizsystem nach einem der Ansprüche 1 bis 6,
**dadurch gekennzeichnet,**
**dass** das Leuchtmittel (8) eine, insbesondere röhrenförmige, vorzugsweise rechteck- oder plattenförmige, LED-Leuchte ist.

8. Flächenheizsystem für ein Gebäude, mit mindestens zwei Deckenstrahlplatten (1), zwischen denen ein, insbesondere rechteck- oder plattenförmiges, Leuchtmittel (13), vorzugsweise ein LED-Array, angeordnet ist.

9. Flächenheizsystem nach Anspruch 8,
**dadurch gekennzeichnet,**
**dass** das Leuchtmittel (13) an der oder jeder Deckenstrahlplatte (1) gehalten ist.

10. Flächenheizsystem für ein Gebäude, mit mindestens einer Deckenstrahlplatte (1) mit integrierter LED-Beleuchtung (8, 13).
